(19) **Europäisches Patentamt / European Patent Office / Office européen des brevets**

(11) **EP 2 233 445 A1**

(12) # EUROPEAN PATENT APPLICATION
published in accordance with Art. 153(4) EPC

(43) Date of publication:
**29.09.2010 Bulletin 2010/39**

(21) Application number: **08865046.0**

(22) Date of filing: **22.12.2008**

(51) Int Cl.:
***C03C 3/085*** (2006.01)    ***C03C 3/087*** (2006.01)

(86) International application number:
**PCT/JP2008/073324**

(87) International publication number:
**WO 2009/081906 (02.07.2009 Gazette 2009/27)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.12.2007 JP 2007333841**

(71) Applicant: **Central Glass Company, Limited Yamaguchi 755-0001 (JP)**

(72) Inventors:
- **TSUZUKI, Tatsuya**
  **Mie 515-0001 (JP)**
- **MITAMURA, Naoki**
  **Mie 515-0001 (JP)**

(74) Representative: **Manitz, Finsterwald & Partner GbR**
**Martin-Greif-Strasse 1**
**80336 München (DE)**

(54) **GLASS COMPOSITION**

(57)     Disclosed is a glass composition including 60 to 70 % by mass of $SiO_2$, 0.5 to 3.0 % by mass of $Al_2O_3$, 2 to 8 % by mass of $Na_2O$, 5 to 15 % by mass of $K_2O$, 8 to 13 % by mass of MgO, 0 to 5 % by mass of CaO, 0 to 8 % by mass of SrO and 0.5 to 5 % by mass of $ZrO_2$, and substantially excluding BaO and $B_2O_3$, wherein a total amount of $Na_2O$ and $K_2O$ is 8 to 18 % by mass, and a total amount of MgO, CaO and SrO is 10 to 22 % by mass.

EP 2 233 445 A1

**Description**

TECHNICAL FIELD

This invention relates to a glass composition which is suitable for formation of a plate glass by a float process, easy to be thermally toughened because of having a proper thermal expansion coefficient and proper viscosity characteristics, and suitable for a heat-resistant glass, particularly a heat-resisting fire-retarding glass or a variety of substrate glasses because of being a glass composition higher in strain point and softening point than a soda-lime glass.

BACKGROUND ART

In case of a plate glass, a thermal stress F induced by the maximum temperature difference $\Delta\theta_{max}$ is given by the following equation (1):

$$F = \alpha \cdot E/(1 \cdot \nu) \times 2/3\Delta\theta_{max} \ \dots \ (1)$$

Here, $\alpha$ is a thermal expansion coefficient, E is a Young's modulus, and $\nu$ is a Poisson's ratio. In case that a strain softening time is sufficient short and the phenomena on change over time is ignored, this thermal stress F becomes nearly equal to a compression stress of a surface layer at a room temperature upon the plate glass being thermally toughened. In other words, if the thermal expansion coefficient and the Young's modulus of the plate glass are made large and the Poisson's ratio of the plate glass is made small, a developed thermal stress, i.e., the compression stress at the glass surface layer can be made large, so that the glass is further toughened. It is to be noted that the Poisson's ratio is small in width of variation according to a glass composition, and therefore the thermal stress is largely affected by the thermal expansion coefficient and the Young's modulus, particularly by the thermal expansion coefficient.

Additionally, when the glass is thermally toughened, the glass is heated to a temperature near a softening point, and thereafter cooled to a temperature at which a rapid viscous flow hardly occurs, so that the glass is toughened by applying a compression stress in a surface layer and by applying a tensile stress in an inner layer. Therefore, in case of a so-called "short foot" glass where the difference between the softening point of the glass and the temperature at which the viscous flow hardly occurs is large, $\Delta\theta_{max}$ in the equation (1) becomes large. As a result, the thermal stress (= compression stress) developed at the surface layer can be large, thereby further toughening the glass.

Hitherto, there have been many proposals for a so-called aluminoborosilicate-based glass formed Of $SiO_2$-$Al_2O_3$-$B_2O_3$-$R_2O$ (R: alkali metals)-R'O(R': bivalent metals). These are high in softening point as compared with a soda-lime silica-based glass and have a heat resistance; however, a thermal toughening is necessary in case of being used, for example, a ko-type fire-retarding door glass (durable to 925 °C). Additionally, the thermal expansion coefficient of this aluminoborosilicate-based glass is low as $30 \times 10^{-7}$/°C to $50 \times 10^{-7}$/°C. Accordingly, there is such a problem that a fracture stress resistance durable to the above-mentioned temperature cannot be obtained with a normal thermal toughening measure. As a measure for solving these problems, for example, a glass composition containing a ZnO component in an aluminoborosilicate-based glass is disclosed (see Patent Citation 1).

A soda-lime silica glass usually used for an automotive vehicle or for architecture is high in thermal expansion coefficient as $85 \times 10^{-7}$/°C - $90 \times 10^{-7}$/°C and therefore is easy to be thermally toughened and chemically stable; however, it is low in strain point and softening point and inferior in heat resistance so as to be small in resistance to a stress softening by heating. In other words, there has been such a problem that a sufficient function cannot be exhibited because a compression stress at a surface is softened by heating at a low temperature even though the glass is thermally toughened to improve the function. In order to improve the heat resistance of this conventional soda-lime silica glass, an alkali-alkaline earth-silica-based glass containing an alkaline earth oxide, particularly containing much higher molecular weight BaO is proposed (see Patent Citations 2 to 5).

Patent Citation 1: Japanese Patent Provisional Publication No. 7-53235
Patent Citation 1: Japanese Patent Provisional Publication No. 9-202641
Patent Citation 1: Japanese Patent Provisional Publication No. 9-255354
Patent Citation 1: Japanese Patent Provisional Publication No. 9-255356
Patent Citation 1: Japanese Patent Provisional Publication No. 10-194771

However, with a glass composition containing a ZnO component in an aluminoborosilicate-based glass described in the above-mentioned Japanese Patent Provisional Publication No. 7-53235, there is such a problem that a ZnO component tends to easily emit from the glass into a reduction atmosphere in a tin bath during a plate glass formation by a float process thereby deteriorating the tin bath.

Additionally, in order to improve the heat resistance of a soda-lime silica glass, an alkaline earth oxide, particularly much higher molecular weight BaO, is described to be contained in the above-mentioned Japanese Patent Provisional Publication No. 9-202641, Japanese Patent Provisional Publication No. 9-255354, Japanese Patent Provisional Publication No. 9-255356, and Japanese Patent Provisional Publication No. 10-194771. However, there is a possibility of occurring such a problem that crystal of a barium salt is formed at the surface of the glass when the glass is heat-treated, thereby bringing about an optical defect or the like. Additionally, containing BaO is not desirable from the viewpoint of toxicity. Further, since much SrO or BaO which is higher in molecular weight of alkaline earth oxides is contained, the density becomes high by about 10 % as compared with a soda-lime silica glass so that many ones exceed 2.70. Additionally, the alkaline earth oxides (CaO, SrO and BaO) other than MgO make the fracture toughness ($K_{IC}$) of the glass small, so that the glass tends to be easily broken if much alkaline earth oxides are contained.

Here, in general, breaking of a glass is considered to be a brittle fracture resulting from a crack serving as a starting point. The resistance against this brittle fracture is called a fracture toughness. In view of this, if the fracture toughness of the glass is small, there arises the following possibility: Although the glass is intended to be further toughened by developing a large thermal stress during a thermal toughening under a suitable thermal expansion coefficient or a suitable temperature difference $\Delta\theta_{max}$, the glass become unbearable to the developed thermal stress and will be broken.

An object of the present invention is to provide a glass composition which is suitable for formation of a plate glass by a float process, easy to be thermally toughened because of having a proper thermal expansion coefficient and proper viscosity characteristics, and suitable for a heat-resistant glass, particularly a heat-resisting fire-retarding glass, or for a variety of substrate glasses because of being a glass composition which is higher in strain point and softening point than a soda-lime glass.

The present invention provides a glass composition including 60 to 70 % by mass of $SiO_2$, 0.5 to 3.0 % by mass of $Al_2O_3$, 2 to 8 % by mass of $Na_2O$, 5 to 15 % by mass of $K_2O$, 8 to13 % by mass of MgO, 0 to 5 % by mass of CaO, 0 to 8 % by mass of SrO and 0.5 to 5 % by mass of $ZrO_2$, and substantially excluding BaO and $B_2O_3$, wherein a total amount of $Na_2O$ and $K_2O$ is 8 to 18 % by mass, and a total amount of MgO, CaO and SrO is 10 to 22 % by mass.

DETAILED DESCRIPTION

According to the present invention, a glass composition which is suitable for formation of a plate glass by a float process, easy to be thermally toughened because of having a proper thermal expansion coefficient and proper viscosity characteristics, and suitable for a heat-resistant glass, particularly a heat-resisting fire-retarding glass, or for a variety of substrate glasses because of being a glass composition which is higher in strain point and softening point than a soda-lime glass, can be obtained.

In a composition system of the present invention, $SiO_2$ is a main component of a glass, so that the heat resistance and chemical durability of the glass are deteriorated if $SiO_2$ is less than 60 % by mass. If this exceeds 70 % by mass, the high temperature viscosity of a molten glass becomes high, thereby making a glass formation difficult. Additionally, the expansion coefficient of the glass becomes too small, thereby making a thermal toughening difficult. Accordingly, the content of $SiO_2$ is within a range of 60 to 70 % by mass, preferably within a range of 62 to 68 % by mass.

$Al_2O_3$ is a component for raising the strain point and the fracture toughness and is an essential component. If this is less than 0.5 % by mass, the strain point and the fracture toughness of the glass lower. If this exceeds 3.0 %, the high temperature viscosity of a molten glass becomes high while a devitrification tendency is increased, thereby making a float formation difficult. Accordingly, the content of this is within a range of 0.5 to 3.0 % by mass, preferably within a range of 0.5 to 2.5 % by mass.

$Na_2O$ as well as $K_2O$ serves as a flux during melting of the glass, and is essential for maintaining the expansion coefficient of the glass at a suitable value. If this is less than 2 % by mass, this is insufficient in effect as the flux, making the expansion coefficient too low. If this exceeds 8 % by mass, the strain point and the softening point become too low. Accordingly, the content of this is within a range of 2 to 8 % by mass, preferably 2 to 6 % by mass.

$K_2O$ exhibits an effect similar to that of $Na_2O$ and is an essential component which provides a suitable expansion coefficient and suitable viscosity characteristics. If this is less than 5 % by mass, those effects are insufficient. If this exceeds 15 % by mass, the expansion coefficient becomes too large, and additionally also the strain point becomes too low. Accordingly, the content of this is within a range of 5 to 15 % by mass, preferably 6 to 14 % by mass.

Regarding the amount of the above-mentioned alkali components ($Na_2O_3$ and $K_2O$), the strain point, the thermal expansion coefficient, the strain point, the thermal expansion coefficient, the high temperature viscosity and the devitrification temperature of the glass can be maintained at suitable ranges by setting the total amount of the alkali components at 8 to 18 % by mass. If the total amount of the alkali components is less than 8 % by mass, the thermal expansion coefficient becomes too low and the high temperature viscosity becomes remarkably high thereby making difficult the formation of the glass by a float process. If this exceeds 18 % by mass, the strain point becomes too low and thermal expansion coefficient increases so that no desirable value can be obtained. Accordingly, the content of this is within a range of 8 to 18 % by mass.

MgO has an effect of lowering the viscosity of the molten glass during melting of the glass and has an effect of raising the strain point and the fracture toughness, and therefore is an essential component. If this is less than 8 % by mass, the effects of this are insufficient. If this exceeds 13 % by mass, the devitrification tendency increases, thereby making difficult the formation of the glass by a float process. Accordingly, the content of this is within a range of 8 to 13 % by mass, preferably 9 to 12 % by mass.

CaO has an effect of lowering the viscosity of the molten glass during melting of the glass and has an effect of raising the strain point of the glass; however, the devitrification tendency increases and the fracture toughness lowers thereby making it difficult to obtain a desirable valve, if this exceeds 5 % by mass. Accordingly, the content of this is within a range of 0 to 5 % by mass, preferably 0 to 3.5 % by mass.

SrO is not essential but lowers the high temperature viscosity of a molten glass under coexistence of CaO thereby suppressing occurrence of devitrification. If this exceeds 8 % by mass, the density excessively rises while lowering the fracture toughness, so that the content of this is desirable to be not more than 8 %.

BaO is substantially not contained because of providing the fear of causing an optical defect and the like and of its toxicity. Here, "substantially not contained" means "not contained at all" or "contained with a content of less than 0.3 %".

Additionally, by setting the total amount of MgO+CaO+SrO within a range of 10 to 22 % by mass within the above-mentioned composition range, the viscosity-temperature gradient is made suitable thereby to improve the formability of the glass, maintaining the meltability of the glass within a good range. Additionally, it is possible to obtain the glass which is excellent in heat reistance and chemical durability and the like and has the thermal expansion coefficient, the density and the fracture toughness within appropriate ranges. Further, if the total amount of MgO+CaO+SrO is less than 10 % by mass, the high temperature viscosity rises thereby making difficult melting and formation of the glass. Additionally, the strain point excessively lowers while the thermal expansion coefficient lowers. If the total amount exceeds 22 % by mass, the devitrification tendency increases thereby making difficult the formation of the glass by a float process. Furthermore, by setting a value (represented as % by mass) of MgO/( MgO+CaO+SrO) at not less than 0.50 within the above-mentioned composition range, the strain point and the softening point of the glass are raised while making it possible to lower the density and raise the fracture toughness. If the value is less than 0.50, desirable viscosity characteristics and fracture toughness are difficult to be obtained.

Additionally, it is desirable that the total amount of CaO+SrO is not more than 10 % by mass. If the total amount of CaO+SrO exceeds 10 % by mass, the density rises while the fracture toughness sharply lowers so that desirable values cannot be obtained.

$ZrO_2$ has effects of raising the strain point of the glass and of improving the chemical durability of the glass, and therefore is an essential component. If this is less than 0.5 % by mass, those effects are insufficient. If this exceeds 5 % by mass, the density rises so that a desirable value cannot be maintained. Accordingly, the content of this is within a range of 0.5 to 5 % by mass, preferably 1 to 5 % by mass.

$B_2O_3$ is substantially not contained. Here, "substantially not contained" means "not contained at all" or "contained with a content of less than 0.3 %".

$LiO_3$ is not an essential component but lowers the high temperature viscosity of the glass and promotes melting of a glass raw material. Additionally, this may be contained within a range of not more than 3 % by mass in order to control the expansion coefficient at a suitable value; however, the strain point and the softening point excessively lower if the content of this exceeds 3 % by mass.

Additionally, the glass of a preferable embodiment of the present invention includes the above-mentioned components; however, other components may be contained within a range which does not harm the object of the present invention, i.e., by a content of not more than 3 % by mass in total of the above other components. For example, $SO_3$, Cl, F, $As_2O_3$ and the like may be contained in an amount of not more than 1 % in total of them in order to improve, for example, the melting characteristics, clearing characteristics, and formability of the glass. Additionally, $Fe_2O_3$, CoO, NiO and the like may be contained in an amount of not more than 1 % in total of them in order to coloring the glass. Further, $TiO_2$ and $CeO_2$ may be contained respectively in an amount of not more than 1 % and an amount of not more than 1 %, and in an amount of not more than 1 % in total of them for the purpose of preventing an electron beam browning and the like.

The thermal expansion coefficient is preferably nearly equal to that of a soda-lime silica glass which is generally formed by a float process. If the thermal expansion coefficient is outside the range of $65\times10^{-7}/°C$ to $90\times10^{-7}/°C$, the thermal toughening is difficult, or there are many fears that breaking of the glass occurs during a thermal toughening.

It is preferable that the strain point is not lower than 570 °C and the softening point is not lower than 800 °C. If the strain point is lower than 570 °C and the softening point is lower than 800 °C, the glass tends to easily deform when exposed to a high temperature while the strength is not difficult to be maintained at a high temperature in case of being thermally toughened. Additionally, it is desirable that the difference between the softening point and the strain point is not lower than 230 °C within the above-mentioned ranges. If this temperature difference is less than 230 °C, a temperature change to a viscosity is small thereby rendering the thermal toughening difficult.

Additionally, it is preferable that a melting temperature $T_m$ (a temperature corresponding to log η = 2.0) is not higher than 1580 °C; a working temperature $T_w$ (a temperature corresponding to log η = 4.0) is not higher than 1200 °C; a liquid phase temperature $T_{liq}$ is not higher than 1200 °C; and the difference ($T_w$ - $T_{liq}$) between the working temperature and the liquid phase temperature is not lower than 0 °C. If the above temperatures and the temperature difference are outside the above ranges, a glass formation by a float process is made difficult.

Further, the density is preferably less than 2.65 g/cm³. If the density exceeds 2.65 g/cm³, there is the fear of tending to easily cause troubles such as a deformation and the like by the own weight of the glass when exposed to a high temperature. The Young's modulus is preferably within a range of 70 to 80 GPa. If the Young's modulus is outside this range, a thermal toughening is difficult to be made, or there are many fears of being broken during the thermal toughening. The fracture toughness is preferably not less than 0.65 MPa·m^(1/2). If the fracture toughness is less than 0.65 MPa·m^(1/2), the glass tends to be easily broken when exposed to a high temperature during the thermal toughening or after the thermal toughening.

[Examples 1 to 10 and Comparative Examples 1 to 4]

(Preparation of Glass)

A platinum crucible was filled with a prepared raw material including silica sand, aluminum oxide, sodium carbonate, sodium sulfate, potassium carbonate, magnesium oxide, calcium carbonate, strontium carbonate, barium carbonate and zirconium silicate, and then the raw material was heated and molten at 1450 to 1600 °C for about 6 hours in an electric furnace. In the course of the heating and melting, a molten glass was stirred by a platinum rod to homogenize the glass. Subsequently, the molten glass was flown into a casting mold to form a glass block, and then transferred to an electric furnace whose temperature was maintained at 500 to 700 °C to be annealed within the furnace. An obtained glass sample had no bubble and no nervation.

A composition (converted to oxide) of the glass based on the prepared raw material is shown in Tables 1 and 2. For these glasses, an average expansion coefficient ($\times 10^{-7}$/°C) at 30 to 300 °C, a strain point (°C), a softening temperature (°C), a working temperature (°C), a melting temperature (°C), a liquid phase temperature (°C), a density (g/cm³), a Young's modulus (GPa) and a fracture toughness Kic (MPa·m^(1/2)) were respectively measured by the following methods.

The expansion coefficient was measured as an average liner expansion coefficient at 30 to 300 °C by using a thermomechanical analyzer TMA8310 (produced by Riken Denki Co., Ltd.). The strain point was measured according to a beam bending method based on the prescriptions of JIS R3103-2 by using a beam bending type viscosity meter (produced by Opt Corporation). The softening point was measured according to a fiber extension method based on the prescriptions of JIS R3103-1 by using a softening point measuring apparatus (produced by Toshiba Glass Co., Ltd.). The working temperature and the melting temperature were measured according to a platinum ball pulling-up method, and the liquid phase temperature was measured by a quenching method using a platinum holder and a temperature gradient furnace. The density was measured according to Archimedes' method using the glass (about 50 g) having no bubble. The Young's modulus was measured by using a sing-around type sound wave measuring apparatus (produced by Ultrasonic Engineering Co., Ltd.). The fracture toughness $K_{IC}$ was calculated according to a fracture toughness testing method (indentation fracture method) for fine ceramics, described in JIS R 1607 by using a microhardness tester (produced by Matsuzawa Seiki Co., Ltd.).

Examples 1 to 5 in Table 1 and Examples 6 to 10 in Table 2 are the glasses according to the present invention; Comparative Example 1 in Table 3 is a soda-lime glass; Comparative Examples 2 and 3 in Table 3 are conventional alkali-alkaline earth-silica-based glasses; and Comparative Example 4 in Table 3 is an aluminoborosilicate-based glass.

[TABLE 1]

| Example | | 1 | 2 | 3 | 4 | 5 |
|---|---|---|---|---|---|---|
| Glass Composition (mass %) | $SiO_2$ | 67.1 | 65.1 | 66.9 | 65.5 | 64.4 |
| | $Al_2O_3$ | 1.2 | 0.9 | 1.2 | 1.3 | 1.3 |
| | $Na_2O$ | 4.1 | 3.1 | 4.1 | 2.9 | 4.6 |
| | $K_2O$ | 12.5 | 10.9 | 13.6 | 12.4 | 10.4 |
| | $Na_2O + K_2O$ | 16.6 | 14.0 | 17.7 | 15.3 | 15.0 |
| | MgO | 10.2 | 10.4 | 11.1 | 10.9 | 10.7 |
| | CaO | 1.4 | 1.9 | 0.2 | 2.8 | 2.7 |
| | SrO | 0.9 | 3.1 | 0.3 | 1.7 | 2.4 |

(continued)

| Example | | 1 | 2 | 3 | 4 | 5 |
|---|---|---|---|---|---|---|
| | BaO | 0.1 | 0.1 | 0.1 | 0.1 | 0.1 |
| | CaO + SrO | 2.3 | 5.0 | 0.5 | 4.5 | 5.1 |
| | MgO +CaO+SrO | 12.5 | 15.4 | 11.6 | 15.4 | 15.8 |
| | MgO / (MgO + CaO + SrO) | 0.82 | 0.68 | 0.96 | 0.71 | 0.68 |
| | $ZrO_2$ | 2.5 | 4.5 | 2.5 | 2.4 | 3.4 |
| Thermal expansion coefficient $\alpha_{30 - 300}$ | $\times 10^{-7}$/ °C | 83.0 | 69.8 | 85.0 | 79.0 | 81.1 |
| Strain point $T_{st}$ | °C | 574 | 606 | 579 | 586 | 574 |
| Softening point $T_{soft}$ | °C | 837 | 860 | 846 | 845 | 824 |
| $T_{soft}$ - $T_{st}$ | °C | 263 | 254 | 267 | 259 | 250 |
| Working temperature $T_w$ ($10^4$ poise temperature) | °C | 1152 | 1162 | 1166 | 1143 | 1127 |
| Melting temperature $T_m$ ($10^2$ poise temperature) | °C | 1527 | 1528 | 1540 | 1521 | 1502 |
| Liquid phase temperature $T_{liq}$ | °C | 1040 | 1099 | 1040 | 1135 | 1126 |
| $T_w$ - $T_{liq}$ | °C | 112 | 63 | 126 | 8 | 1 |
| Density d | g·cm$^{-3}$ | 2.52 | 2.59 | 2.50 | 2.55 | 2.58 |
| Young's modulus E | GPa | 73 | 77 | 72 | 75 | 76 |
| Fracture toughness value $K_{Ic}$ | MPa·m$^{1/2}$ | 0.79 | 0.77 | 0.79 | 0.70 | 0.70 |

[TABLE 2]

| Example | | 6 | 7 | 8 | 9 | 10 |
|---|---|---|---|---|---|---|
| Glass Composition (mass %) | $SiO_2$ | 65.6 | 67.5 | 65.8 | 64.3 | 65.3 |
| | $Al_2O_3$ | 1.7 | 1.2 | 1.7 | 2.2 | 1.7 |
| | $Na_2O$ | 3.8 | 3.6 | 4.3 | 5.7 | 3.0 |
| | $K_2O$ | 6.5 | 11.2 | 7.3 | 8.8 | 11.5 |
| | $Na_2O + K_2O$ | 10.3 | 14.8 | 11.6 | 14.5 | 14.5 |
| | MgO | 9.8 | 10.2 | 9.8 | 10.1 | 10.5 |
| | CaO | 2.3 | 2.1 | 2.3 | 2.8 | 3.2 |
| | SrO | 7.2 | 1.6 | 5.7 | 2.5 | 1.7 |
| | BaO | 0.1 | 0.1 | 0.1 | 0.1 | 0.1 |
| | CaO + SrO | 9.5 | 3.7 | 8.0 | 5.3 | 4.9 |
| | MgO + CaO + SrO | 19.3 | 13.9 | 17.8 | 15.4 | 15.4 |
| | MgO / (MgO + CaO + SrO) | 0.51 | 0.73 | 0.55 | 0.66 | 0.68 |
| | $ZrO_2$ | 3.0 | 2.5 | 3.0 | 3.5 | 3.0 |
| Thermal expansion coefficient $\alpha_{330 - 300}$ | $\times 10^{-7}$/°C | 70.0 | 74.2 | 71.2 | 81.2 | 74.6 |
| Strain point $T_{st}$ | °C | 591 | 586 | 582 | 571 | 593 |
| Softening point $T_{soft}$ | °C | 847 | 848 | 840 | 821 | 843 |
| $T_{soft}$ - $T_{st}$ | °C | 256 | 262 | 258 | 250 | 250 |
| Working temperature $T_w$ ($10^4$ poise temperature) | °C | 1148 | 1166 | 1142 | 1131 | 1143 |
| Melting temperature $T_m$ ($10^2$ poise temperature) | °C | 1523 | 1553 | 1523 | 1504 | 1523 |
| Liquid phase temperature $T_{liq}$ | °C | 1147 | 1114 | 1123 | 1130 | 1133 |
| $T_w$ - $T_{liq}$ | °C | 1 | 52 | 19 | 1 | 10 |
| Density d | g·cm$^{-3}$ | 2.64 | 2.53 | 2.61 | 2.57 | 2.56 |
| Young's modulus E | GPa | 78 | 76 | 78 | 77 | 76 |

(continued)

| Example | | 6 | 7 | 8 | 9 | 10 |
|---|---|---|---|---|---|---|
| Fracture toughness value $K_{Ic}$ | MPa·m$^{1/2}$ | 0.72 | 0.82 | 0.71 | 0.67 | 0.76 |

[TABLE 3]

| Comparative example | | 1 | 2 | 3 | 4 |
|---|---|---|---|---|---|
| Glass Composition (mass %) | $SiO_2$ | 70.7 | 54.0 | 57.5 | 50.0 |
| | $Al_2O_3$ | 2.1 | 9.0 | 6.2 | 10.0 |
| | $B_2O_3$ | | | | 15.0 |
| | $Na_2O$ | 13.5 | 4.2 | 4.5 | |
| | $K_2O$ | 0.9 | 8.8 | 6.5 | |
| | $Na_2O + K_2O$ | 14.4 | 13.0 | 11.0 | 0.0 |
| | MgO | 3.5 | 3.0 | 1.5 | |
| | CaO | 9.3 | 7.7 | 5.2 | |
| | SrO | | | 7.5 | |
| | BaO | | 9.6 | 8.3 | 25.0 |
| | CaO+SrO | 9.3 | 7.7 | 12.7 | 0.0 |
| | MgO + CaO + SrO | 12.8 | 10.7 | 14.2 | 0.0 |
| | MgO / (MgO + CaO + SrO) | 0.27 | 0.28 | 0.11 | - |
| | $ZrO_2$ | | 3.7 | 2.8 | |
| Thermal expansion coefficient $\alpha_{30-300}$ | ×10$^{-7}$/°C | 87.2 | 86.1 | 82.4 | 46.0 |
| Strain point $T_{st}$ | °C | 565 | 590 | 572 | 593 |
| Softening point $T_{soft}$ | °C | 731 | 838 | 824 | 844 |
| $T_{soft} - T_{st}$ | °C | 166 | 248 | 252 | 251 |
| Working temperature $T_w$ (10$^4$ poise temperature) | °C | 1024 | 1131 | 1131 | 1151 |
| Melting temperature $T_m$ (10$^2$ poise temperature) | °C | 1434 | 1506 | 1524 | 1596 |
| Liquid phase temperature $T_{liq}$ | °C | 1041 | 1170 | 1059 | Not measured |
| $T_w - T_{liq}$ | °C | -17 | -39 | 72 | - |
| Density d | g · cm$^{-3}$ | 2.51 | 2.74 | 2.78 | 2.76 |
| Young's modulus E Fracture toughness value $K_{Ic}$ | GPa MPa · m$^{1/2}$ | 72 0.81 | 79 0.61 | 77 0.62 | Not measured |

(Results)

In the soda-lime silica glass of Comparative Example 1, the expansion coefficient is as high as 87×10$^{-7}$/°C; however, it is apparent that the strain point and the softening point are remarkably low. The glasses of Comparative Examples 2 and 3 have a suitable expansion coefficient and high in strain point and softening point so as to have a heat resistance; however, it will be understood that $K_{IC}$ is as low as less than 0.65. The glass of Comparative Example 4 is high in strain point and softening point so as to have a heat resistance; however, it is difficult to be formed by a float process because the expansion coefficient is as low as 46×10$^{-7}$/°C while the melting temperature is near 1600 °C.

In contrast, the glasses of Examples 1 to 10 have a suitable value of 65 to 90×10$^{-7}$/°C and have a high strain point of not lower than 570 °C and a high softening point of not lower than 800 °C, and additionally the glasses have a working temperature of not higher than 1200 °C and a melting point of not higher than 1580 °C so as to be easily formed by a float process. Additionally, the glasses have a density of less than 2.65 g/cm$^3$ and a Young's modulus of 70 to 80 GPa, and $K_{IC}$ of not less than 0.65 MPa·m$^{1/2}$. Accordingly, the glasses according to the present invention have the expansion coefficient and viscosity characteristics suitable for a thermal toughening and have a heat resistance nearly equal to that of a conventional heat resistant glass. Additionally, the glasses according to the present invention are low in density and high in strength, and therefore are easily thermally toughened as compared with a conventional glass.

Additionally, in the glasses according to the present invention, the thermal toughening can be maintained even at a high temperature, and therefore it is apparent that breaking during a thermal toughening and in use becomes less.

Furthermore, the glasses according to the present invention have a viscosity characteristic suitable for a float process, and therefore a productivity nearly equal to that of a soda-lime glass used in architecture and for an automotive vehicle glass can be expected.

INDUSTRIAL APPLICABILITY

According to the present invention, the glass which has a heat resistance, a low density and a high strength and is easily toughened as discussed above can be obtained. By using this glass for a heat-resisting fire-retarding glass, the glass becomes durable to conditions which are much severer than those encountered hitherto. Additionally, by using the glass for a variety of substrate glasses, deformation and breaking of the glass decreases while improving a production efficiency.

**Claims**

1. A glass composition comprising 60 to 70 % by mass of $SiO_2$, 0.5 to 3.0 % by mass of $Al_2O_3$, 2 to 8 % by mass of $Na_2O$, 5 to 15 % by mass of $K_2O$, 8 to 13 % by mass of MgO, 0 to 5 % by mass of CaO, 0 to 8 % by mass of SrO and 0.5 to 5 % by mass of $ZrO_2$, and substantially excluding BaO and $B_2O_3$, wherein a total amount of $Na_2O$ and $K_2O$ is 8 to 18 % by mass, and a total amount of MgO, CaO and SrO is 10 to 22 % by mass.

2. A glass composition as claimed in Claim 1, wherein a weight % ratio of MgO/( MgO+CaO+SrO) is not less than 0.50.

3. A glass composition as claimed in Claim 1 or 2, wherein a thermal expansion coefficient at a temperature of 30 to 300 °C is $65\times10^{-7}$/°C to $90\times10^{-7}$/°C; a strain point $T_{st}$ is not lower than 570 °C; a softening point $T_{soft}$ is not lower than 800 °C; and a difference ($T_{soft}$ - $T_{st}$) between the softening point $T_{soft}$ and the strain point $T_{st}$ is not lower than 230 °C.

4. A glass composition as claimed in any one of Claims 1 to 3, wherein a density d is less than 2.65 g/cm$^3$; a Young's modulus is 70 to 80 GPa; and a fracture toughness $K_{IC}$ is not less than 0.65 MPa·m$^{1/2}$.

5. A glass composition as claimed in any one of Claims 1 to 4, wherein a melting temperature $T_m$ (temperature corresponding to log η = 2.0) is not higher than 1580 °C; a working temperature $T_w$ (temperature corresponding to log η = 4.0) is not higher than 1200 °C; a liquid phase temperature $T_{liq}$ is not higher than 1200 °C; and a difference ($T_w$ - $T_{liq}$) between the working temperature and the liquid phase temperature is not lower than 0 °C, in which the glass composition is suitable for formation of a plate glass by a float process.

6. A glass composition as claimed in any one of Claims 1 to 5, wherein a total amount of CaO and SrO is not more than 10 % by mass.

## INTERNATIONAL SEARCH REPORT

| | International application No. |
|---|---|
| | PCT/JP2008/073324 |

**A. CLASSIFICATION OF SUBJECT MATTER**
*C03C3/085*(2006.01)i, *C03C3/087*(2006.01)i

According to International Patent Classification (IPC) or to both national classification and IPC

**B. FIELDS SEARCHED**

Minimum documentation searched (classification system followed by classification symbols)
C03C3/085, C03C3/087

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)
INTERGLAD

**C. DOCUMENTS CONSIDERED TO BE RELEVANT**

| Category* | Citation of document, with indication, where appropriate, of the relevant passages | Relevant to claim No. |
|---|---|---|
| X<br>A | JP 8-133778 A  (Asahi Glass Co., Ltd.),<br>28 May, 1996 (28.05.96),<br>Claims 1, 2, 4<br>& US 5631195 A | 1,3,5<br>2,4,6 |
| A | JP 2001-180967 A  (Central Glass Co., Ltd.),<br>03 July, 2001 (03.07.01),<br>Full text<br>(Family: none) | 1-6 |
| A | JP 10-152337 A  (Nippon Sheet Glass Co., Ltd.),<br>09 June, 1998 (09.06.98),<br>Full text<br>(Family: none) | 1-6 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 March, 2009 (25.03.09) | 07 April, 2009 (07.04.09) |

| Name and mailing address of the ISA/<br>Japanese Patent Office | Authorized officer |
|---|---|
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7053235 A
- JP 9202641 A
- JP 9255354 A
- JP 9255356 A
- JP 10194771 A